Europäisches Patentamt

(19) European Patent Office

Office européen des brevets

(11) Publication number: **0 101 528 B1**

# EUROPEAN PATENT SPECIFICATION

(45) Date of publication of patent specification: **08.11.89**

(51) Int. Cl.⁴: **G 08 C 19/02, H 04 B 3/54**

(21) Application number: **82304374.0**

(22) Date of filing: **19.08.82**

(54) Improvements in 2-wire analog communication systems.

(43) Date of publication of application:
**29.02.84 Bulletin 84/09**

(45) Publication of the grant of the patent:
**08.11.89 Bulletin 89/45**

(84) Designated Contracting States:
**DE FR GB IT**

(56) References cited:
**PATENTS ABSTRACTS OF JAPAN, vol. 6, no. 91, 28th May 1982, pages E-109, 969**
**IEEE TRANSACTIONS ON INDUSTRY APPLICATIONS, vol. IA-I2, no. 4, July-August 1976, pages 378-386, New York, USA B.H. HAMILTON: "Pulse modulation and signal processing circuits to perform précise control and monitoring functions with high-voltage isolation"**
**SECOND INTERNATIONAL SYMPOSIUM ON SUBSCRIBER LOOPS AND SERVICES, 3rd-7th May 1976, pages 92-96, IEE, London, GB G.A. AXE: "The development of electronic devices for the local line network of the UK post office"**
**EDN MAGAZINE, vol. 26, no. 7, April 1981, pages 268, 269 Boston, Massachusetts, USA D. PIPPENGER: "One wire handles power, data and timing"**

(73) Proprietor: **HONEYWELL INC.**
**Honeywell Plaza**
**Minneapolis Minnesota 55408 (US)**

(72) Inventor: **Houvig, Felix J.**
**3 Forest Road**
**Wayne Pennsylvania 19087 (US)**
Inventor: **Rowlands, Ronald H.**
**3764 Worthington Road**
**Collegeville Pennsylvania 19426 (US)**

(74) Representative: **Votier, Sidney David et al**
**CARPMAELS & RANSFORD 43, Bloomsbury Square**
**London WC1A 2RA (GB)**

(56) References cited:
**ADVANCES IN INSTRUMENATION, vol. 29, no. 4, 1974, page 801, lines 1-5, New York, USA A.E. TURNER: "Intrinsic safety made easy for all hazardous atmospheres"**

## Description

The present invention is related to data communication systems, and more specifically to analog systems of the 2-wire type utilizing power supply circuits.

2-wire analog transmission systems are well known. One standard form of such systems utilizes a power supply coupled to a transmitter via a resistor, with the transmitter sensing some condition and signalling the value of the sensed condition by controlling the current drawn from the power supply between 4 and 20 ma, see for example Advances in Instrumentation, vol. 29, No. 4, 1974, pages 1 to 5. The 4 ma minimum current is sufficient to energize the circuitry of the transmitter, and the excess of current drawn, above the 4 ma level, indicates the value of the condition.

This system has the limitation that its accuracy is limited to at best around 0.1%, and is essentially a unidirectional system with the transmitter being essentially uncontrolled and transmitting continuously. While such systems are well established, they are therefore limited in both accuracy and function. Furthermore, although microprocessor techniques are being utilized in the construction of transmitters, only very limited advantages can be taken of the facilities which such techniques permit, because of the analog and unidirectional nature of the transmitters in the system.

The object of the present invention is to provide a simple yet effective expansion of such systems to permit digital as well as analog signalling.

Accordingly the present invention provides a data communication system comprising:

a DC power supply;

a transmitter coupled to the power supply by a pair of supply lines over which it is energized and which senses a condition and controls the current flowing through the supply lines accordingly to generate an analog output; and

means for sensing the current flowing in the supply lines, characterized by a communication device, coupled to the supply lines, which can generate a digital sequence of signal pulses represented by two different current levels drawn from the supply lines;

the transmitter being responsive to the first such pulse to terminate its analog output and receive the subsequent pulses.

A system embodying the invention will now be described, by way of example, with reference to the drawings, in which:

Figure 1 is a block diagram of the system;

Figure 2 is a diagram of the communication device;

Figure 3 is a diagram of the transmitter; and

Figures 4A and 4B are waveforms of the operation of the system.

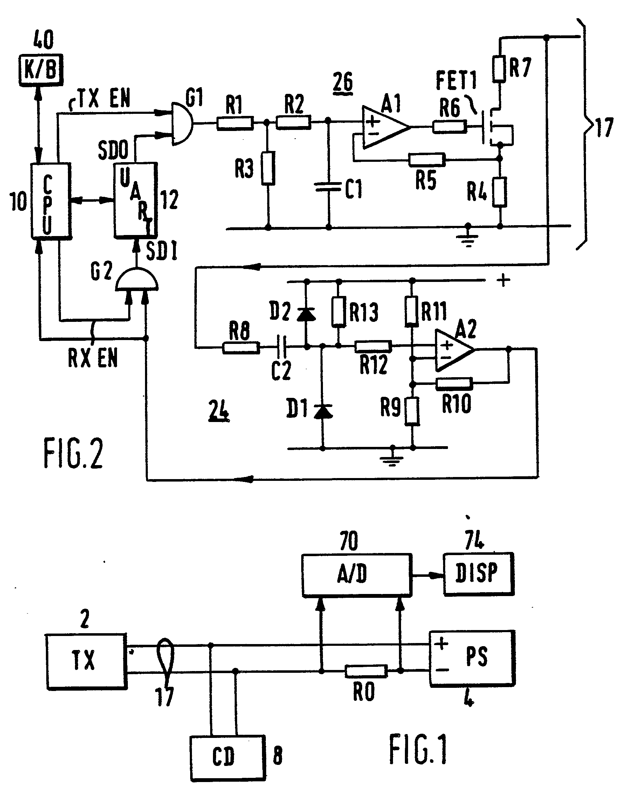

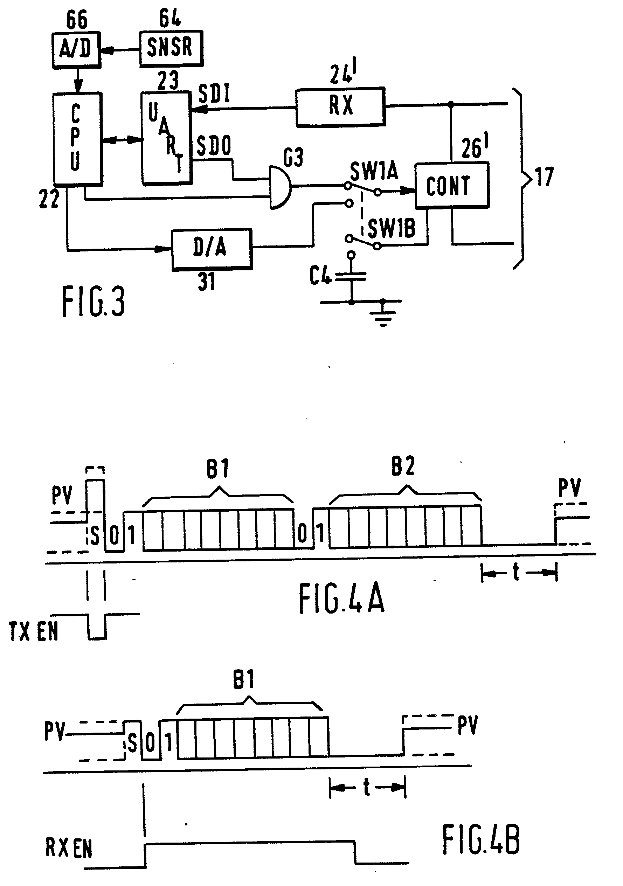

In Figure 1, a power supply 4 is coupled to a transmitter 2 via a pair of lines 17, one of which includes a resistor RO of at least 250 Ω. The transmitter 2 draws a current of between 4 and 20 mA, in dependence on a sensed condition (commonly called the process variable, PV). The transmitter signal may be sensed, for example, by an analog-to-digital converter 70 coupled across the resistor RO and feeding a display unit 74. The power supply 4 of course, produces a constant voltage, so that the current transmitted by the transmitter 2 is converted to a corresponding voltage across resistor RO.

In addition, the wires 17 have a communication device 8 coupled to them. This device may for example be a hand-held device, somewhat like a pocket calculator, with a keyboard and display, which can be plugged onto the wires 17 at any convenient point.

For digital communication, the normal steady or slowly varying process variable signal is effectively interrupted, and digital signalling occurs, using the two signal levels of 4 to 20 mA. Two directions of signalling have to be considered; from the communication device 8 to the transmitter 2, and vice versa.

Considering first the initiation of digital communication by the communication device 8, during this operation the device 8 accepts or "sinks" 16 mA from the line pair 17 for a binary 1 and 0 mA for a binary 0. The transmitter 2 senses this current variation as a voltage change across its input/output terminals. This voltage change occurs because the 16 mA drawn by the device 8 for a 0 causes an additional 4 V voltage drop across the resistor RO, and this 4 V change appears at the input to transmitter 2. By the use of bandpass filters, the transmitter 2 responds only to voltage variations substantially more rapid than those allowed in analog signal transmission. Thus the transmitter 2 can send both analog and digital signals but receives only digital signals.

Figure 4A shows waveforms for a data transmission initiated by the device 8. The main waveform is the total current through the resistor RO, i.e. the combined currents drawn by the transmitter 2 and the device 8. When the device 8 initiates communication with the transmitter 2, the process variable (PV) current can be anywhere in the range of 4 to 20 mA. The communication device draws an additional 16 mA from the loop making the total loop current 20 to 36 mA. This occurs for only one digital bit time and is used as a "signal initiation" bit S to signal to the transmitter 2 that communication is being initiated. The voltage at the transmitter input terminal will drop by 4 V. When the transmitter 2 senses the drop in voltage at its input/output terminals, it waits for one bit time and then drops its own current drain from the former process variable level to a new level of 4 mA. This current drop is matched by a concurrent drop in current drain by the communication device 8 from 16 to 0 mA. Total loop current then drops from the range of 20 to 36 mA down to 4 mA, giving a 0 bit. The transmitter 2 maintains its current drain of 4 mA until the communication operation is finished. The loop current is then set for each bit, including the "start" bit 1 and any parity bits, to 4 or 20 mA by the communication device 8. These variations in current are sensed by the transmitter 2 as changes in voltage across its input/output terminals, whereby each bit is sensed. When the communication from the communications device 8 to the transmitter 2 is finished, indicated by steady loop current of 4 mA for a predefined time period t, the transmitter senses this and adjusts its current drain back to the former process variable (PV) level within the range of 4 to 20 mA.

The communication format shown in Figure 4A comprises the transmission of 2 bytes B1 and B2 of 8 bits each. Each byte is preceded by a 0 bit for reference and a 1 start bit. The 0 level following the second byte B2 lasts for the time t, as shown.

Figure 4B shows waveforms for a digital data transmission initiated by the (PV) transmitter 2 to the device 8. The transmitter 2 forces its current drain to increase from the process variable level (4 to 20 mA) to 20 ma. It holds this current level for one bit time as a "signal initiate" bit S, then drops the current level to 4 mA. This 0 is also held for one bit time, after which the information transmission starts with a "start" bit 1. Digital transmission from the transmitter 2 to the device 8 continues with the loop current being varied by the transmitter 2 between 4 and 20 mA for each bit until the communication operation is completed. Completion of the communication operation occurs when the loop current is held steady at 4 mA for the predefined time period t, after which the transmitter 2 adjusts the loop current back to the former process variable level in the range of 4 to 20 mA. Figure 4B shows the transmission of a single 8-bit byte B1.

Figure 2 shows the communication device 8 in more detail. The device consists of 3 main sections: a communications controller, a current driver 26, and a current receiver 24. The communications controller section includes a microprocessor CPU 10 coupled to a keyboard 40 and a universal asynchronous receiver transmitter UART 12. The CPU 10 is also coupled to a display device, a clock source, a RAM, and a ROM (not shown), as is well known. The CPU 10 controls two gates G1 and G2, gate G1 being fed from the serial data out output of UART 12, and gate G2 feeding the serial data in input (SDI) of UART 12.

Gate G1 feeds the current driver section 26. This consists of an attenuator and filter R1—R2—R3—C1 feeding an amplifier A1 with a feedback resistor R5. Amplifier A1 drives a power output field effect transistor FET1, which is connected serially between resistors R4 and R7 across the line pair 17.

The line pair 17 is coupled to the current receiver section 24, which feeds gate G2. In this section, the line pair 17 feeds a filter R8—C2, which in turn feeds an amplifier A2 via a protection network D1—D2 and resistive coupling R18—R12. Resistors R9, R10, and R11 provide voltage bias and feedback for amplifier A2.

When device 8 is to transmit data, the CPU 10 produces a transmit enable signal TX EN, as shown in Figure 4A, to cause gate G1 to pass data from the UART 12 to the current driver section 26, and the data is transmitted over line pair 17. The UART 12 is of course loaded from the CPU 10 with the first byte, and the UART converts the byte into serial form and appends the start (1) and stop (0) bits, and takes care of parity if desired. For reception, the current receiver section 24 passes the start bit S to the CPU 10, which then emits a receiver enable signal RX EN (Figure 4B) to the gate G2, which is thereby enabled to pass the received bits from the section 24 to the UART 12. Since the communication is controlled by the device 8, once the device 8 has started a transmission it expects to always detect a response. Once the communication from the device 8 to the transmitter 2 is completed, CPU 10 in the communication device 8 monitors the signal from the receiver circuit 24. Specifically, CPU 10 detects the transition from 20 to 4 mA which occurs after the initial change from 4 to 20 mA. CPU 10 is thereby alerted to the fact that the one bit time later the "start" bit will be supplied, and CPU 10 proceeds to enable gate G2. The start bit is then received from the transmitter 2 and transmission of the digital data from the transmitter 2 commences. After the byte or bytes are transmitted, the communication is completed at a "Stop" bit wherein the loop current is reduced to 4 ma. The transmitter 2 after waiting for the preset time t adjusts the loop current back to the applicable process variable current level to produce the normal 4 to 20 mA process variable data signals for transmission from the transmitter 2.

Figure 3 shows the transmitter 2 in more detail. A receiver section 24' is of similar form and function to the receiver section 24 of the device 8. A CPU 22 and a UART 23 are also broadly similar form and function to the CPU 10 and UART 12 of the device 8. The CPU 22 is coupled to a sensor 64 via an analog-to-digital converter 66, and to a RAM, a ROM, and a clock source (not shown) in conventional manner.

The transmitter 2 also includes a current controller 26', which is normally used to transmit the process variable PV signal, with switch pair SW1A and SW1B (controlled by CPU 22) in the lower position. The CPU 22 feeds the signal to be transmitted to the controller 26' via a digital-to-analog converter 31, and the controller 26' has capacitor C4 coupled to it, ensuring the only slow changes of output can occur. For digital transmission, switch pair SW1A—SW1B is changed over to the positions shown. This removes capacitor C4 from the controller 26', permitting its output to vary rapidly. This changing over of the switch pair also changes the main input to controller 26' from the converter 31 to the gate G3, which is enabled by CPU 22 and fed with serial data bytes to be transmitted from UART 23. The time constant capacitor C4, which is switched out of circuit for digital communications, stores a value proportional to the last process variable current of the 4 to 20 mA range signal. When digital communications are completed, the capacitor C4 is switched back into the circuit by the switch SW1B and the process variable (PV) current transmission is restored with minimal settling time of the system.

## Claims

1. A data communication system comprising:
a DC power supply (4);
a transmitter (2) coupled to the power supply by a pair of supply lines (17) over which it is energized and which senses a condition and controls the current flowing through the supply lines accordingly to generate an analog output; and
means (RO, 70, 74) for sensing the current flowing in the supply lines,
characterized by a communication devce (8), coupled to the supply lines, which can generate a digital sequence of signal pulses represented by two different current levels drawn from the supply lines;
the transmitter being responsive to the first such pulse (S) to terminate its analog output (PV) and receive the subsequent pulses.

2. A system according to Claim 1 characterized in that the transmitter is responsive to a predetermined period (t) during digital transmission without a change of signal level to recommence its analog output.

3. A system according to either previous Claim characterized in that the transmitter can itself initiate digital transmission by terminating its analog output and generating a digital sequence of signal pulses, the communication device being responsive to such pulses.

4. A system according to any previous Claim characterized in that the transmitter and the communication device each include a respective preprogrammed microprocessor (22, 10).

## Patentansprüche

1. Datenübertragungssystem mit einer Gleichstromversorgungseinrichtung (4);
einem über zwei Versorgungsleitungen (17) an die GS-Versorgungseinrichtung angeschlossenen und über diese mit Strom versorgten Transmitter (12), der einen Zustand mißt und der über die Versorgungsleitungen fließenden Strom zur Erzeugung eines analogen Ausgangssignals entsprechend steuert; sowie
Einrichtungen (RO, 70, 74) zum Messen des über die Versorgungsleitungen fließenden Stroms
gekennzeichnet durch ein an die Versorgungsleitungen angeschlossenes Übertragungsgerät (8), welches eine durch zwei verschiedene, von den Versorgungsleitungen aufgenommene Strompegel dargestellte digitale Folge von Signalimpulsen erzeugen kann;
und durch das Ansprechen des Transmitters auf den ersten solchen Impuls (S), um damit sein analoges Ausgangssignal (PV) zu beenden und die nachfolgenden Impulse zu empfangen.

2. System nach Anspruch 1, dadurch gekennzeichnet, daß der Transmitter anspricht, wenn während der digitalen Übertragung über eine vorgegebene Zeitspanne (t) keine Änderung des Signalpegels auftritt, und dann wieder sein analoges Ausgangssignal liefert.

3. System nach einem vorangehenden Anspruch, dadurch gekennzeichnet, daß der Transmitter selbst eine digitale Übertragung einleiten kann, indem er sein analoges Ausgangssignal beendet und eine digitale Folge von Signalimpulsen erzeugt, und daß das Übertragungsgerät auf solche Impulse anspricht.

4. System nach einem der vorangehenden Ansprüche, dadurch gekennzeichnet, daß Transmitter und Übertragungsgerät je einen entsprechend vorprogrammierten Mikroprozessor (22, 10) enthalten.

## Revendications

1. Un système de communication des données comprenant:
un alimentation en courant continu (4);
un transmetteur (2) relié à l'alimentation par une paire de lignes d'alimentation (17) par l'intermédiaire desquelles il est excité et qui détecte une condition et commande en conséquence le courant traversant les lignes d'alimentation afin de générer une sortie analogique; et
des moyens (RO, 70, 74) de détection du courant s'écoulant dans les lignes d'alimentation,
caractérisé par un dispositif de communication (8), relié aux lignes d'alimentation, qui peut générer une séquence numérique d'impulsions de signal représentées par deux niveaux de courant distincts tirés des lignes d'alimentation;
le transmetteur étant sensible à la première impulsion de cette sorte (S) afin der terminer sa sortie analogique (PV) et de recevoir les impulsions suivantes.

2. Un système selon la revendication 1 caractérisé en ce que le transmetteur est sensible à une période de consigne (t) pendant une transmission numérique sans changement de niveau de signal afin de recommencer sa sortie analogique.

3. Un système selon l'une quelconque des revendications précédentes caractérisé en ce que le transmetteur peut de lui-même lancer une transmission numérique en terminant sa sortie analogique et en générant une séquence numérique d'impulsions de signal, le dispositif de communication étant sensible à de telles impulsions.

4. Un système selon l'une quelconque des revendications précédentes caractérisé en ce que le transmetteur et le dispositif de communication comportent chacun un microprocesseur respectif préprogrammé (22, 10).

FIG.2

FIG.1

1

FIG.3

FIG.4A

FIG.4B